# EUROPÄISCHE PATENTSCHRIFT

(11) **EP 1 114 988 B1**
(45) Veröffentlichungstag und Bekanntmachung des Hinweises auf die Patenterteilung: **28.04.2010**
(21) Anmeldenummer: 01100251.6
(22) Anmeldetag: 03.01.2001
(51) Int. Cl.: G01L 27/00

(54) **Prober für Drucksensoren**
Testing device for pressure sensors
Dispositif d'essai de capteurs de pression

(30) Priorität: 04.01.2000 DE 10000133
(43) Veröffentlichungstag der Anmeldung: 11.07.2001
(73) Patentinhaber: Karl Suss Dresden GmbH, 01561 Sacka (DE)
(72) Erfinder: Dietrich, Claus, 01561 Sacka (DE); Hirschfeld, Botho, 01108 Dresden (DE); Runge, Dietmar, 01454 Grosserkmannsdorf (DE); Teich, Michael, 01468 Moritzburg OT Friedewald (DE); Schneidewind, Stefan, 01468 Reichenberg (DE)
(74) Vertreter: Lippert, Stachow & Partner

(56) Entgegenhaltungen:
- DE-A- 19 705 799
- US-A- 4 777 716

## Beschreibung

Die Erfindung betrifft einen Prober für Drucksensoren im Waferverbund oder für vereinzelte Drucksensoren sowie für vereinzelt geöffnete Drucksensoren mit einer Aufnahme für die Drucksensoren, mit Einrichtungen zur elektrischen Kontaktierung der elektrischen Anschlüsse wenigstens eines der Drucksensoren sowie mit Mitteln zur Verbindung der elektrischen Anschlüsse eines ausgewählten Drucksensors mit einer elektrischen Auswerteeinheit.

Beispielsweise ist aus der deutschen Offenlegungsschrift DE 197 05 799 eine Vorrichtung bekannt, welche der Prüfung von einzelnen oder gruppenweise angeordneten Drucksensoren dient. Dabei wird auf jeden Drucksensor, die Druckanschlüsse mit Spielraum umschließend, ein Faltenbalg mit einer Federkraft dichtend aufgesetzt und der Prüfdruck über den Faltenbalg auf den Druckanschluss geleitet. Diese endmontierten Drucksensoren sind mit einem Gehäuse und entsprechenden Druckanschlüssen versehen und weisen demzufolge für die Endkontaktierung vorbereitete elektrische Anschlüsse auf.

In solche konfektionierten Sensoren integrierte Drucksensoren auf mikromechanischer Basis enthalten ein druckempfindliches Element, das bei einer Druckbeaufschlagung zumindest teilweise geringfügig aus seiner Ruhelage ausgelenkt wird und infolge dieser Auslenkung/Verbiegung ähnlich einem piezoelektrischen Bauelement eine elektrische Spannungsänderung indiziert. Diese elektrische Spannungsänderung wird durch eine entsprechende Auswerteschaltung verstärkt und ist der Druckbelastung weitgehend proportional. Derartige Drucksensoren werden üblicherweise mit technologischen Verfahren der Halbleitertechnik im Waferverbund hergestellt und besitzen beispielsweise eine in das Siliziumsubstrat eingeätzte Sensorkammer, deren eine Seite als Membran bzw. Sensorelement ausgebildet ist und die gegenüber diesem Sensorelement mit einer Öffnung bzw. einem Sensoreinlass versehen sind. Weiterhin befinden sich auf einer Seite des Drucksensors elektrische Anschlüsse für die Spannungsversorgung und den Abgriff der Messwerte, wobei zusätzlich noch Logikschaltungen und/oder Verstärkungsschaltungen integriert sein können.

Nach der Fertigstellung der Drucksensoren im Waferverbund erfolgt die Zerteilung desselben durch Trennschleifen in einzelne Drucksensoren/Chips, die dann beispielsweise in Gehäuse endmontiert werden. Nach dieser Endmontage erfolgt dann die Funktionsprüfung und ggf. die Kalibrierung der Verstärkerschaltung auf dem Drucksensor, wobei fehlerhafte Drucksensoren aussortiert werden.

Es ist ersichtlich, dass für die Fertigung der Drucksensoren ein erheblicher Aufwand notwendig ist und dass von besonderem Nachteil ist, dass eine Funktionsprüfung der Drucksensoren erst im fertig gestellten Zustand vorgesehen ist.

Ein Prober für Drucksensoren, welche noch nicht endmontiert sind, ist in der US-Patentschrift 4,777,716 beschrieben. Eine die Bauelemente umschließende Vakuumkammer wird erzeugt, indem ein unteres und ein oberes Proberteil unter Zwischenschalten einer Mittelplatte dichtend fest miteinander verbunden werden, so dass ein Wafer mit einzelnen Drucksensoren, der auf einen Chuck aufgelegt ist, in der Vakuumkammer eingeschlossen ist und die Vakuumkammer mit dem Prüfdruck beaufschlagt werden kann. Auf diese Weise liegt an allen Drucksensoren gleichzeitig und außerdem berührungslos ein einheitlicher Prüfdruck an. Die elektrischen Anschlüsse der einzelnen Drucksensoren des Wafers, die zumindest dem Signalabgriff und der Spannungsversorgung dienen, weisen meist die Form von Pads auf, so dass diese zur Prüfung temporär beispielsweise mit speziellen Testspitzen kontaktiert werden müssen. In der US 4,777,716 sind die Testspitzen durch das obere Proberteil geführt und werden durch eine Öffnung in der Mittelplatte auf die jeweiligen Kontaktpads des zu prüfenden Drucksensors aufgesetzt. Nachteilig ist hierbei, dass nur gleichartige Drucksensoren mit einheitlichem Prüfdruck geprüft werden können und ein Wechsel der Wafer die Demontage der miteinander verschraubten Bauteile erfordern, was für eine Fertigungsprüfung wegen des dafür erforderlichen Zeitaufwandes nicht geeignet ist.

Der Erfindung liegt daher die Aufgabe zugrunde, einen Prober für Drucksensoren zu schaffen, mit dem es möglich ist, nicht endmontierte Drucksensoren und Drucksensoren, die sich noch im Waferverbund befinden sowie vereinzelt geöffnete Drucksensoren, selektiv auf ihre Funktion zu überprüfen und mit dem es insbesondere möglich ist, die Funktionskennlinien der Drucksensoren aufzunehmen.

Die der Erfindung zugrundeliegende Aufgabe wird bei einem Prober der eingangs genannten Art durch eine Vorrichtung gelöst, welche durch die Merkmale Anspruchs 1 gekennzeichnet ist. Die darauf rückbezogenen Ansprüche stellen vorteilhafte Ausgestaltungen dar.

Eine erste bevorzugte Ausgestaltung der Erfindung ist **dadurch gekennzeichnet, dass** ein Druckkopf zur Erzeugung einer Strömung in Richtung zu einem Sensoreinlass oder einem Sensorelement eines ausgewählten Drucksensors zur Erzeugung eines dynamischen Staudruckes vorgesehen ist. Diese an sich universell einsetzbare Ausgestaltung der Erfindung ist besonders für solche Drucksensoren geeignet, die eine besonders empfindliche oder unebene Oberflächenstruktur aufweisen, da es hier im Gegensatz zu den anderen Ausgestaltungen der Erfindung nicht notwendig ist, dass der Druckkopf auf den Drucksensor aufgesetzt wird. Damit wird die Gefahr jeglicher mechanischer Beschädigung vermieden.

Der Druckkopf ist mit einer vertikal ausgerichteten Kanüle ausgestattet, deren untere Öffnung in Arbeitsposition in einem vorgegebenen Abstand über dem Drucksensor endet und deren anderes Ende mit einer Druckmesskammer und einer Messdruckzuführung verbunden ist.

Da der Druckkopf ohnehin über jedem ausgewählten Sensorelement positioniert werden muss, ist eine Fortführung der Erfindung **dadurch gekennzeichnet, dass** an der Kanüle im Bereich der unteren Öffnung mehrere Sondennadeln zur elektrischen Kontaktierung der elektrischen Anschlüsse des Drucksensors angeordnet sind, wobei die Sondennadeln auf den elektrischen Anschlüssen des Drucksensors im elastischen Bereich aufsetzbar sind.

Da die elektrischen Anschlüsse auch an anderer Stelle des Drucksensors angeordnet sein können, ist es weiterhin auch möglich, eine übliche Probecard zur elektrischen Kontaktierung jeweils eines ausgewählten Drucksensors und einen Druckkopf vorzusehen, der unabhängig von der Probecard am ausgewählten Drucksensor positionierbar ist.

In einer anderen Variante der Erfindung ist eine Probecard zur elektrischen Kontaktierung jeweils eines ausgewählten Drucksensors vorgesehen, wobei ein Druckkopf gemeinsam mit der Probecard am ausgewählten Drucksensor positionierbar ist.

Der Druckkopf zur Erzeugung eines dynamischen Staudruckes kann an einem X-Y-Z-Kreuztisch befestigt sein.

Die Erfindung soll nachfolgend an Ausführungsbeispielen näher erläutert werden. In den zugehörigen Zeichnungen zeigen:
- Fig. 1: eine andere Ausführung der Erfindung mit einem Druckkopf zur dynamischen Druckerzeugung;
- Fig. 2: eine vergrößerte Darstellung eines Drucksensors.

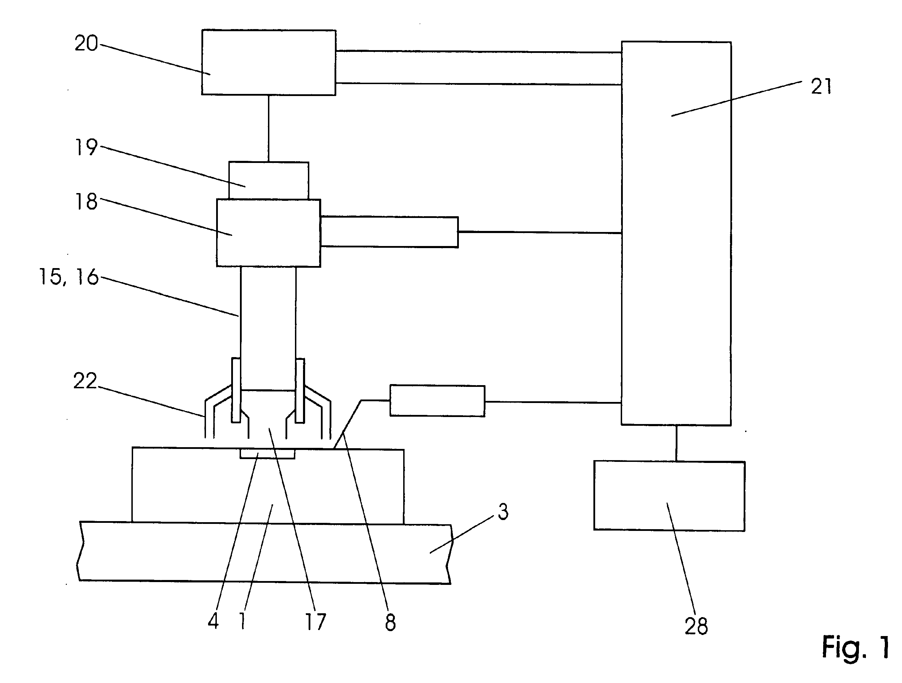

Fig. 1 zeigt einen erfindungsgemäßen Prober, bei welchem der erforderliche Druck dynamisch durch einen Staudruck erzeugt wird. Hierzu ist ein Druckkopf 15 zur Erzeugung einer Strömung in Richtung zum Sensoreinlass 6 oder zum Sensorelement 4 eines ausgewählten Drucksensors 1 zur Erzeugung eines Staudruckes vorgesehen. Der Druckkopf 15 ist hierzu mit einer vertikal ausgerichteten Kanüle 16 versehen, deren untere Öffnung 17 in einem vorgegebenen Abstand über dem Drucksensor 1 endet und deren anderes Ende mit einer Druckmesskammer 18 und über eine Drossel 19 mit einem Druckregler 20 zur einer Messdruckzuführung verbunden ist. Damit kann mit dem Druckkopf 15 eine berührungslose Messung realisiert werden. Der Drucksensor 1 ist auf einem Thermochuck 3 befestigt.

Der Druckregler 20 und die Druckmesskammer 18 zur Ermittlung des Istdruckes am oder im Drucksensor 1 sind mit einer elektrischen Ansteuer- und Auswerteinheit 21 verbunden.

Weiterhin sind an der Kanüle 16 im Bereich der unteren Öffnung 17 mehrere Sondennadeln 22 zur elektrischen Kontaktierung der elektrischen Anschlüsse 7 des Drucksensors 1 angeordnet, die wie üblich im elastischen Bereich auf den Drucksensor 1 aufsetzbar sind.

Alternativ kann auch eine Probecard zur elektrischen Kontaktierung der elektrischen Anschlüsse 7 jeweils eines ausgewählten Drucksensors 1 vorgesehen werden, wobei der Druckkopf 15 unabhängig von der Probecard oder gemeinsam mit dieser am ausgewählten Drucksensor 1 positionierbar ist.

Die Sondennadeln 22 an der Kanüle oder die Sondennadeln der Probecard sind in beiden Fällen mit der elektrischen Ansteuer- und Auswerteeinheit 21 zu verbinden.

Wird der Druckkopf 15 an einem X-Y-Z-Kreuztisch befestigt, besteht die Möglichkeit, jeden der Drucksensoren 1 im Waferverbund nacheinander auszuwählen und den Druckkopf 15 auf dem entsprechenden Drucksensor 1 aufzusetzen. Dabei spielt es keine Rolle, ob in einem Waferverbund befindliche Drucksensoren 1 oder auch einzelne aus dem Waferverbund herausgelöste oder auch teilmontierte Drucksensoren 1 auszuwählen sind.

Weiterhin besteht die Möglichkeit, den Druckkopf 15 unmittelbar an der Probecard zu befestigen und mit dieser gemeinsam über den jeweils ausgewählten Drucksensor 1 zu positionieren. Es ist auch denkbar, die Sondennadeln 8 unmittelbar am Druckkopf 15 zu befestigen.

Die Abmessungen des Druckkopfes 15 müssen dabei so gewählt werden, dass die elektrischen Anschlüsse 7 frei bleiben, so dass diese für die Sondennadeln 8 frei zugänglich sind.

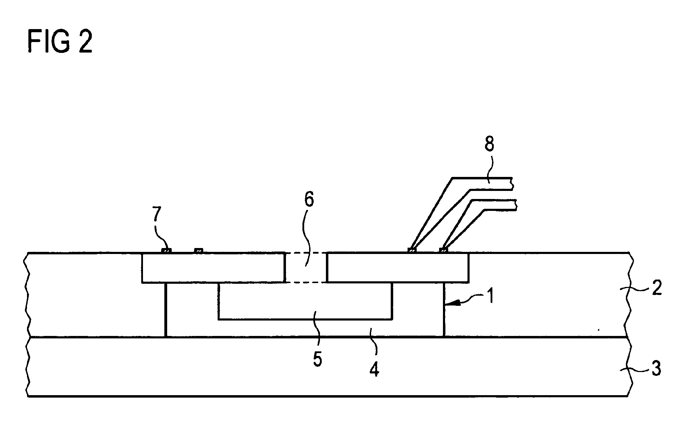

Aus Fig. 2 ist ein mikromechanischer Drucksensor 1 ersichtlich, der sich noch im Verbund eines Wafers 2 befindet, wobei die benachbarten Drucksensoren nicht dargestellt sind. Dieser Wafer 2 ist auf einem üblichen Thermochuck 3 befestigt, wobei selbstverständlich auch ein einfacher Chuck verwendet werden kann.

Der Drucksensor 1 enthält ein Sensorelement 4, das einen Sensorinnenraum 5 einseitig begrenzt. Auf der dem Sensorelement 4 gegenüberliegenden Seite des Drucksensors 1 befindet sich ein Sensoreinlass 6. Über diesen Sensoreinlass 6 kann der Drucksensor 1 mit einem anderen abgegrenzten Raum verbunden werden, dessen Innendruck zu bestimmen ist. Weiterhin befindet sich im Bereich des Sensoreinlasses 6 noch eine integrierte Schaltung zur Auswertung, Verstärkung der vom Sensorelement 4 erzeugten Spannungsänderung. Die Stromversorgung des Drucksensors 1 und die Abnahme der Messwerte erfolgt über elektrische Anschlüsse 7, die im dargestellten Beispiel auf der Oberseite des Drucksensors 1 angeordnet sind.

Zur Kontaktierung der elektrischen Anschlüsse 7 können übliche Probecards, wie sie in handelsüblichen Waferprobern eingesetzt werden, verwendet werden. Die Sondennadeln 8 der Probecard sind zur elektrischen Kontaktierung einfach auf die elektrischen Anschlüsse 7 aufzusetzen und mit dem anderen Ende mit einer elektrischen Auswerteeinheit zu verbinden. Anschließend oder gleichzeitig dazu muss dann im Drucksensor 1 ein vorgegebener Innendruck erzeugt werden.

Bei sämtlichen Ausgestaltungen der Erfindung wird bevorzugt Luft als Medium zur Erzeugung des Staudruckes verwendet. Es ist jedoch grundsätzlich auch möglich, hierzu spezielle Gase, z.B. Stickstoff, oder auch Flüssigkeiten einzusetzen.

### Bezugszeichenliste

- 1: Drucksensor
- 2: Wafer
- 3: Thermochuck
- 4: Sensorelement
- 5: Sensorinnenraum
- 6: Sensoreinlass
- 7: elektrischer Anschluß
- 8: Sondennadel
- 15: Druckkopf
- 16: Kanüle
- 17: Öffnung
- 18: Druckmeßkammer
- 19: Drossel
- 20: Druckregler
- 21: Ansteuer- und Auswerteelektronik
- 22: Sondennadel

## Patentansprüche

1. Prober für Drucksensoren im Waferverbund oder für vereinzelte Drucksensoren mit einer Aufnahme für die Drucksensoren, mit Einrichtungen zur elektrischen Kontaktierung der elektrischen Anschlüsse wenigstens eines der Drucksensoren sowie mit Mitteln zur Verbindung der elektrischen Anschlüsse (7) eines ausgewählten Drucksensors (1) mit einer elektrischen Auswerteeinheit (21), **dadurch gekennzeichnet, dass** der Prober eine Einrichtung mit einem Druckkopf (15) zur Erzeugung einer Strömung in Richtung zu einem Sensoreinlass (6) oder einem Sensorelement (4) des ausgewählten Drucksensors (1) zur Erzeugung eines Staudrucks vorgegebener Größe und Dauer auf das Sensorelement (4) des ausgewählten Drucksensors (1) enthält und dass der Druckkopf (15) so am ausgewählten Drucksensor (1) positionierbar ist, dass gleichzeitig das Sensorelement (4) durch die Staudruckbeaufschlagung aus seiner Ruhelage bewegbar und die elektrischen Anschlüsse (7) des ausgewählten Drucksensors (1) durch die Mittel zur Verbindung der elektrischen Anschlüsse (7) mit der elektrischen Auswerteeinheit (21) verbindbar sind.

2. Prober nach Anspruch 1, **dadurch gekennzeichnet, dass** der Druckkopf (15) eine vertikal ausgerichtete Kanüle (16) aufweist, deren untere Öffnung (17) in einem vorgegebenen Abstand über dem Drucksensor (1) endet und deren anderes Ende mit einer Druckmesskammer (18) und einer Messdruckzuführung verbunden ist.

3. Prober nach Anspruch 2, **dadurch gekennzeichnet, dass** an der Kanüle (16) im Bereich der unteren Öffnung (17) mehrere Sondennadeln (22) zur elektrischen Kontaktierung der elektrischen Anschlüsse (7) des Drucksensors (1) angeordnet sind.

4. Prober nach Anspruch 3, **dadurch gekennzeichnet, dass** die Sondennadeln (22) auf den elektrischen Anschlüssen (7) des Drucksensors (1) im elastischen Bereich aufsetzbar sind.

5. Prober nach Anspruch 1 und 2, **dadurch gekennzeichnet, dass** der Prober eine Probecard zur elektrischen Kontaktierung jeweils eines ausgewählten Drucksensors (1) umfasst und dass ein Druckkopf (15) unabhängig von der Probecard am ausgewählten Drucksensor (1) positionierbar ist.

6. Prober nach Anspruch 1 und 2, **dadurch gekennzeichnet, dass** der Prober eine Probecard zur elektrischen Kontaktierung jeweils eines ausgewählten Drucksensors (1) umfasst und dass ein Druckkopf (15) gemeinsam mit der Probecard am ausgewählten Drucksensor (1) positionierbar ist.

7. Prober nach einem der Ansprüche 1 bis 6, **dadurch gekennzeichnet, dass** der Druckkopf (15) an einem X-Y-Z-Kreuztisch befestigt ist.

## Claims

1. Testing device for pressure sensors in a wafer compound or for isolated pressure sensors, said device having a socket for the pressure sensors, means for electrically contacting the electrical connections of at least one of the pressure sensors and means for connecting the electrical connections (7) of a selected pressure sensor (1) to an electrical evaluation unit (21), **characterised in that** the testing device contains a means having a pressure head (15) for generating a flow towards a sensor inlet (6) or a sensor member (4) of the selected pressure sensor (1) in order to exert an impact pressure of predetermined size and duration on the sensor member (4) of the selected pressure sensor (1), and **in that** the pressure head (15) may be positioned on the selected pressure sensor (1) in such a way that at the same time the sensor member (4) may be moved out of its idle position under the force of the impact pressure and the electrical connections (7) of the selected pressure sensor (1) may be connected to the electrical evaluation unit (21) by the means for connecting said electrical connections (7).

2. Testing device according to claim 1, **characterised in that** the pressure head (15) comprises a vertically oriented channel (16), of which the lower opening (17) ends at a predetermined distance above the pressure sensor (1) and the other end is connected to a pressure measuring chamber (18) and a measuring pressure feed.

3. Testing device according to claim 2, **characterised in that** a plurality of needle probes (22) for electrically contacting the electrical connections (7) of the pressure sensor (1) are arranged at the channel (16) in the region of the lower opening (17).

4. Testing device according to claim 3, **characterised in that** the needle probes (22) may be mounted on the electrical connections (7) of the pressure sensor (1) in the resilient region.

5. Testing device according to claims 1 and 2, **characterised in that** the testing device comprises a test card for electrically contacting each selected pressure sensor (1), and **in that** a pressure head (15) may be positioned on the selected pressure sensor (1) independently of the test card.

6. Testing device according to claims 1 and 2, **characterised in that** the testing device comprises a test card for electrically contacting each selected pressure sensor (1), and **in that** a pressure head (15) may be positioned on the selected pressure sensor (1) together with the test card.

7. Testing device according to any one of claims 1 to 6, **characterised in that** the pressure head (15) is fixed to an X-Y-Z cross table.

## Revendications

1. Dispositif d'essai pour des capteurs de pression dans un ensemble de puces ou des capteurs de pression séparés, comportant un moyen de réception pour les capteurs de pression, des installations de liaison électrique des branchements électriques d'au moins l'un des capteurs de pression ainsi que des moyens pour relier les contacts électriques (7) d'un capteur de pression (1) sélectionné à une unité d'exploitation électrique (21),
**caractérisé en ce que**
le dispositif d'essai comporte une installation munie d'une tête de pression (15) pour générer un flux en direction d'une entrée de capteur (6) ou d'un élément (4) du capteur de pression (1) sélectionné pour générer une pression dynamique d'amplitude et de durée prédéfinies agissant sur l'élément (4) du capteur de pression (1) sélectionné, et
la tête de pression (15) est susceptible d'être positionnée sur le capteur de pression (1) sélectionné pour qu'en même temps, l'élément de capteur (4) soit déplacé hors de sa position de repos par l'application de la pression dynamique et que les contacts électriques (7) du capteur de pression (1) sélectionné, soient reliés par les moyens de liaison des contacts électriques (7) à l'unité d'exploitation électrique (21).

2. Dispositif d'essai selon la revendication 1,
**caractérisé en ce que**
la tête de pression (15) comporte une canule (16) orientée verticalement, dont l'ouverture inférieure (17) se termine à une distance prédéfinie au-dessus du capteur de pression (1) et dont l'autre extrémité est reliée à une chambre de mesure de pression (18) et à un retour de pression de mesure.

3. Dispositif d'essai selon la revendication 2,
**caractérisé par**
plusieurs aiguilles de sonde (22) prévues sur la canule (16) au niveau de son ouverture inférieure (17) pour assurer le branchement électrique des contacts électriques (7) du capteur de pression (1).

4. Dispositif d'essai selon la revendication 3,
**caractérisé en ce que**
les aiguilles de sonde (22) s'appliquent sur les contacts électriques (7) du capteur de pression (1) dans une zone élastique.

5. Dispositif d'essai selon les revendications 1 et 2,
**caractérisé en ce que**
le dispositif d'essai comporte une carte d'essai pour assurer le contact électrique chaque fois d'un capteur de pression (1) sélectionné, et
une tête de pression (15) peut être positionnée sur le capteur de pression (1) sélectionné, en fonction de la carte d'essai.

6. Dispositif d'essai selon les revendications 1 et 2,
**caractérisé en ce que**
le dispositif d'essai comporte une carte d'essai pour la mise en contact électrique de chaque fois un capteur de pression (1) sélectionné, et
une tête de pression (15) peut être positionnée en commun avec la carte d'essai sur le capteur de pression (1) sélectionné.

7. Dispositif d'essai selon l'une des revendications 1 à 6,
**caractérisé en ce que**
la tête de pression (15) est fixée à une table d'indexage en X-Y-Z.
